# EUROPEAN PATENT APPLICATION

(11) **EP 2 279 888 A1**
(43) Date of publication of application: **02.02.2011**
(21) Application number: 10180394.8
(22) Date of filing: 13.03.2006
(51) Int. Cl.: B60K 15/06

(54) **Fuel tank with low profile fuel reservoir**

(30) Priority: 14.03.2005 US 661408 P
(62) Divisional of application: 06725027.4
(71) Applicant: Inergy Automotive Systems Research (Société Anonyme), 1120 Bruxelles (BE)
(72) Inventor: Tipton, Larry, Sterling Heights, MI 48310 (US); Reuther, Paul Daniel, Oxford, MI 48371 (US)
(74) Representative: Jacques, Philippe

(57) **Abstract**

Fuel tank comprising a reservoir and a fuel pump sucking fuel out of said reservoir, wherein said reservoir has a low profile and wherein the fuel pump is mounted horizontally or inclined into or onto said low profile reservoir.

## Description

To date, the fuel delivery modules (FDM) require a substantial reservoir capacity to provide enough reserve fuel for low fuel considerations.

It is namely so that in certain circumstances, for example, when the volume of fuel contained in the fuel tank of an automotive vehicle falls below a certain minimum level and this vehicle travels through a prolonged curve, uphill or downhill, or if it is otherwise subjected to sudden and pronounced changes in speed, direction, etc., the fuel could be displaced to one side of the tank to such an extent that the inlet end of the dip tube, which forms part of the fuel-intake tubing, is at least temporarily no longer submerged in the fuel. Under such conditions, the dip tube sucks out air instead of fuel, thereby producing an interruption in the feed fuel flow that impedes the proper operation of the internal-combustion engine.

In order to avoid such problems, most fuel tanks include a reservoir i.e. a subtank intended to trap fuel and act as a reserve. In this field, there is a wide variety of hardware configurations required to accommodate the large variation of tank designs. The smaller the tank, the more difficult the system assembly and the design issues are. The proliferation of reservoir systems to meet the variety adds complexity and cost for manufacturing. This complexity of functionality introduces multiple failure modes and the eventual repair and warranty costs.

The need for a reliable, simple, compact, low cost alternative to address the wide variety of applications is apparent.

To solve that problem, the main idea behind this invention is the use of a low profile fuel reservoir (i.e. a flat reservoir or a reservoir having a height smaller than its length and width) with reduced "vertical" dimensions.

Hence, the present invention concerns a fuel tank having a reservoir and a fuel pump sucking fuel out of said reservoir, wherein said reservoir has a low profile and wherein the fuel pump is mounted horizontally or inclined into or onto said low profile reservoir.

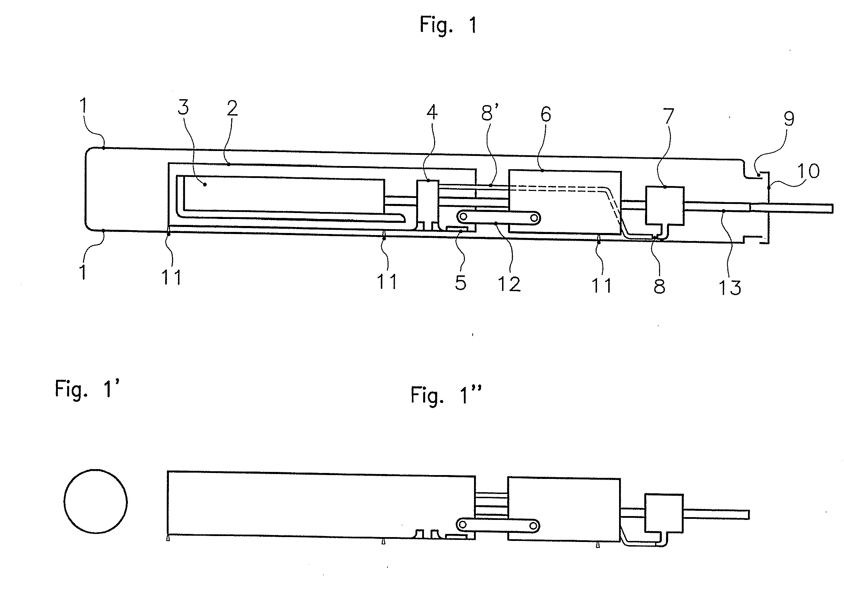

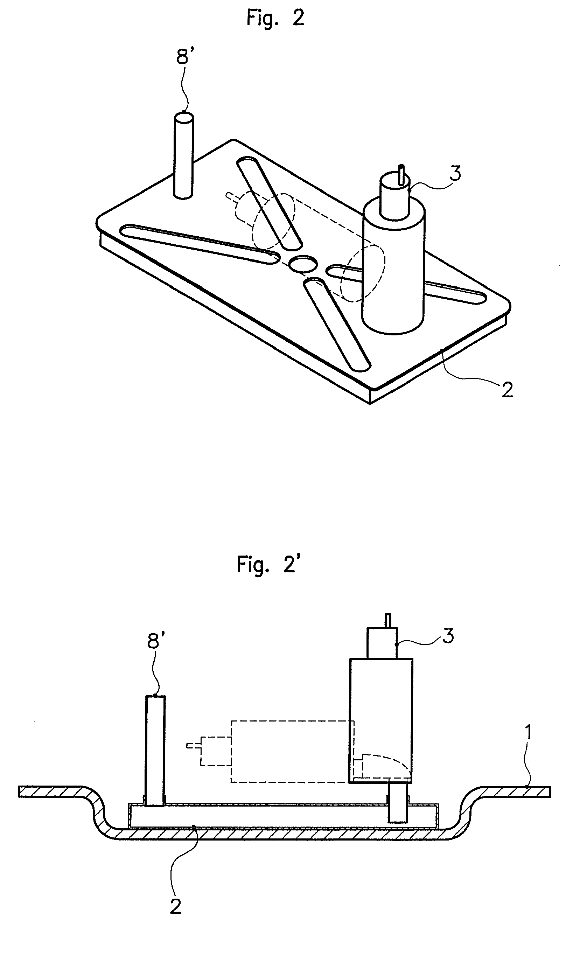

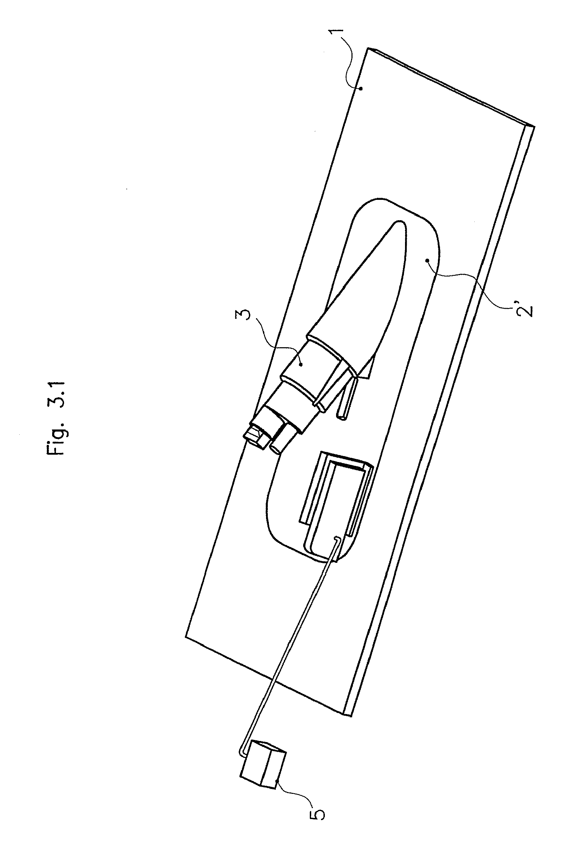

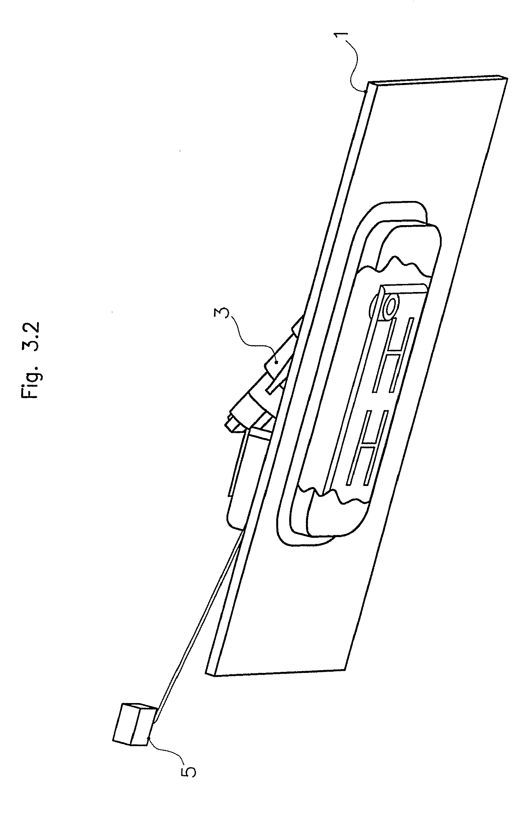

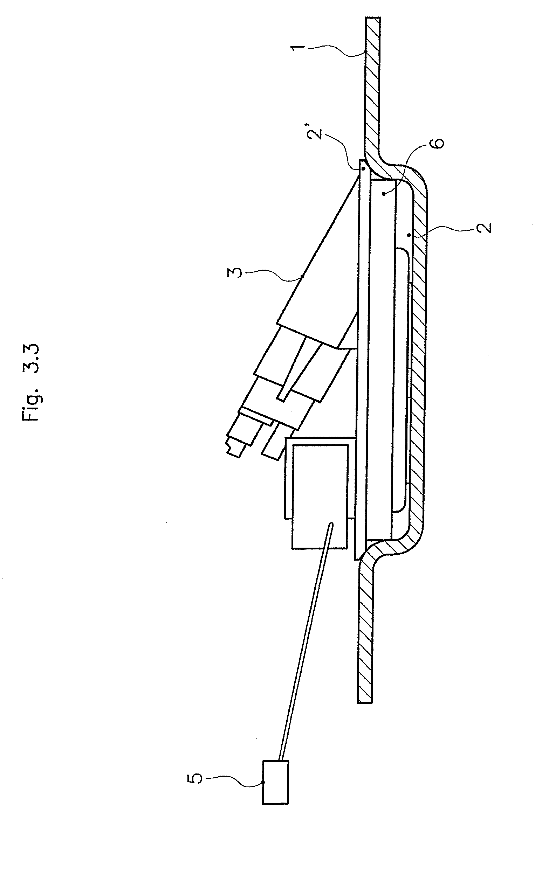

By maintaining a low profile, more fuel can be retained within the media thus minimizing the gravitational effects. This low profile reservoir may be :
- A flat reservoir which lies on the bottom of the tank and in which the main fuel pump is preferably mounted horizontally (see figure 1); it may be used for "Flat tank" designs where the tank thickness (or internal height) is less than 100mm.
- A reservoir recessed into the floor of the tank so that the top of the filter/reservoir is flush with the floor (see figures 2 and 3). Therefore it can access all the fuel in the tank. The reservoir function will retain fuel during the events described above. In the embodiments pictured in figures 2 and 3, the filter element is directly enclosed within the reservoir. In other words :
   the reservoir acts as the filter housing. In this embodiment, the main fuel pump is preferably mounted horizontally on top of the recess (see figure 2) or
   inclined and partly inside of it (figure 3).

According to the invention, "mounted into" means either that the fuel pump is entirely inside the volume of the reservoir, in which case it generally is mounted horizontally into it (see figure 1), or that it is partly within the reservoir, at least the fuel inlet port being inside the reservoir. In that case, the pump may be mounted inclined i.e. with its axis making an angle of less than 90°, (preferably less than 60° and even, less than 45°) with the tank bottom (see figure 3).

And by "mounting onto", it is generally meant that the pump is plugged into or in a fixation point (like a recess of adequate shape for instance) on the reservoir's cover. In that case again, the pump preferably is mounted horizontally in order to save height (see figure 2) which implies that the fixation means preferably are deformable so that the pump can be tilted (and put horizontally) after having been plugged in (since generally happens vertically).

Accordingly, there are 2 main preferred embodiments related to pump mounting :
- either the fuel pump is entirely inside or entirely outside the volume of the reservoir, and is mounted horizontally into or onto it; or
- the fuel pump is partly within and partly outside the volume of the reservoir and it is mounted inclined into it.

The fuel tank according to the invention is preferably made of plastic material (and most preferably, the reservoir as well). The term "plastic" denotes any material comprising at least one synthetic resin polymer. Particularly suitable plastics come from the thermoplastics category.

The term "thermoplastic" denotes any thermoplastic polymer, including thermoplastic elastomers, as well as blends thereof. In particular, polyolefins, thermoplastic polyesters, polyketones, polyamides and copolymers thereof may be used. A blend of polymers or copolymers may also be used, as may a blend of polymer materials with inorganic, organic and/or natural fillers such as, for example, but non limitingly, carbon, salts and other inorganic derivatives, natural fibres or polymeric fibres. It is also possible to use multilayer structures consisting of stacked layers bonded together comprising at least one of the polymers or copolymers described above.

One polymer that is often used is polyethylene. Excellent results have been obtained with high density polyethylene (HDPE).

The wall of the tank may be made up of a single layer of thermoplastic or of two layers. One or more other possible additional layers may, advantageously, consist of layers of a material that forms a barrier to the liquids and/or gases. As a preference, the nature and thickness of the barrier layer are chosen in such a way as to limit as far as possible the permeability towards the liquids and gases in contact with the interior surface of the tank. As a preference, this layer is based on a barrier resin, that is to say on a resin impermeable to the fuel such as EVOH for example (a copolymer of ethylene and partially hydrolysed vinyl acetate). Alternatively, the tank may be subjected to a surface treatment (fluoration or sulphonation) the purpose of which is to render it impermeable to the fuel.

Typical reservoir systems for fuel tanks include :
- A first fill valve to bypass the reservoir jet pump passage to allow fuel through the bottom for the initial pump prime or re-prime after running out of fuel. Historically, these valves can allow reservoir leak-down due to contamination which results in the loss of fuel during low fuel conditions.
- A jet pump system intended to over-fill the reservoir by sweeping fuel from the bottom of the tank through a connecting passage by means of the entrained flow generated by a small orifice. The jet orifice flow is provided by the return line flow from the fuel pressure regulator on the engine (or in-tank regulator for some Returnless applications) or from the outlet of the fuel pump or positive pressure/flow connection directly from the pumping element. This system is necessary to maintain a fuel supply at the pump inlet for the low fuel conditions. Inherently, it sweeps the contaminants from the tank into the reservoir where they accumulate. This creates a reduction in the life of the pump strainer through a higher pressure drop which induces pump cavitation resulting in fuel pressure loss and engine failure.
- A reservoir cover to reduce fuel slosh losses during low fuel conditions. If this is an additional part, it adds to the cost of the assembly.

According to a first embodiment (pictured in figure 1), the low profile reservoir lies on the bottom of the fuel tank i.e. its lower wall is flush with the tank's bottom (floor) and its volume extends inside the fuel tank volume. In that case, the pump is preferably mounted horizontally and completely inside said reservoir so that the fuel tank can remain flat. Preferably, the reservoir is inserted into this flat fuel tank through a side wall thereof which is provided with an opening and a flange. In this embodiment, preferably, the fuel filter is in line with the reservoir and in the case of a system with pressure regulator, said regulator is also preferably in line with the filter as well. By doing so, a complete flat module is obtained, which is very easy to fix within a flat tank, using the above mentioned opening and flange.

According to a second embodiment (pictured in figures 2 and 3), the reservoir is fixed within or integrated to a recess in the bottom of the tank so that its volume extends outside the fuel tank volume. Preferably, this recess has a depth such that the upper wall of the reservoir is flush with the tank bottom.

In any of these embodiments, the low profile reservoir is preferably a closed volume (i.e. is either provided with a cover or included in a closed housing) to reduce fuel slosh/escape during low fuel conditions.

The low profile reservoir/filter module described in figures 2 and 3 can be used to provide a much more simple system than the one of figure 1 since it is based on an adapted design of the fuel tank floor configuration to receive it. However, it implies that there should be enough space within the vehicle for which it is intended, to receive said recess which extends below the volume of the fuel tank.

The direct result of the reservoir being recessed in the floor is the elimination of unusable fuel. All the fuel in the tank is then available to the pump. This eliminates the need to increase the tank capacity to compensate for fuel that is not available. It ensures that the fuel is drawn away from the tank as low as possible with using neither priming pump (jet pump) nor first fill valve.

In this embodiment, either the low profile reservoir is fixed in a recess of the fuel tank, or it may in fact be that recess itself. In any case, it preferably is provided with a cover.

The above mentioned recess is preferably integrally molded with the fuel tank bottom. One way of performing this in practice is the use of a fixed cavity inside the mold, which has the shape of the recess. However, in that case, the reservoir is preferably not the recess itself unless it is provided with a separate cover in order to prevent fuel egression from the reservoir in the event of excessive movement.

Therefore, another, preferred way to mold the recess is through the use of mobile parts in the mold's bottom which are able to pinch the parison bottom and create a recess with integrated cover. In that case, the recess can directly play the role of the reservoir and receive the filter element in it.

The filter element is then preferably directly enclosed into the integrally molded recess so that the recess plays the role both of the low profile reservoir and of a filter housing covers substantially the entire bottom of the reservoir.

In any case, the filter element preferably covers the entire surface of the reservoir.

The enclosure for the filter media enhances the surface tension of the fuel in and around the depth media. The surface tension of the filter depth media allows the pump to draw in fuel through the filter media without sucking air as long as the filter is in contact with fuel at any point along its perimeter. The capillary action of the depth media helps to wick fuel into the media. This also provides a barrier to air (surface tension) by wetting the entire depth if the media so that it becomes easier for the pump to suck fuel instead of air.

This eliminates the need for the parts which create a "sub tank". It requires a filter profile to reach into areas of the tank floor to access as little as 0.5 liters of fuel without loosing fuel pressure.

When the cover is a separate part provided on the recess, use of a perimeter seal between said cover and said recess can be made to enhance the fuel retention during extended "G" force events or long periods of inactivity. That design sealed around the perimeter of the recess in the tank floor and eliminates the need for a separate reservoir component.

This disclosed embodiment (where the low profile reservoir/filter module is fixed or integrated in a recess of the tank bottom and includes a filter element) drastically simplifies the reservoir and filtration function by eliminating :
- The first fill valve function. There is no reservoir container that requires bypassing in order to introduce fuel the first time.
- The jet pump system is not required. There is no reservoir container that requires filling for low fuel conditions since it is at the lowest point.
- Vapor formation. The pumping of fuel into the reservoir generates vapor as a direct result of the turbulent flow created by the jet pump function. This also results in a lower requirement for the carbon canister which reduces cost.
- Excessive flow. Reduced pump flow requirements result without the requirement to supply the jet pump system.

The simplicity also provides a low cost alternative with substantially reduced failure modes to improve reliability and durability.

The reservoir according to the invention preferably is of adequate structural strength in order to mount and retain other components such as :
- The fuel pump
- The fuel level sender
- The in-line fuel filter
- The fuel pressure regulator
- The fuel return line.

In that case, since the reservoir of the invention is in fact a flat, low profile module, said components should be mounted therein horizontally and in series, one after the other (as pictured in figure 1, for the case of a flat module lying on the tank bottom).

Finally, the structure could be designed for a no-tool-assembly on to the floor of the fuel tank to secure its optimum position and accuracy of the fuel level sender signal output. A kind of dove tail attachment can be used for instance, or a mounting flange like in figure 1.

The above described inventive concept is illustrated in a non limitative way by Figures 1 to 3, which have already been referred to above (because showing some specific embodiments of the present invention).

The systems pictured comprise the following elements :
- 1.: fuel tank
- 2.: reservoir inside the fuel tank, provided with a cover (2')
- 3.: main fuel supply pump
- 4.: jet pump (for filling the reservoir)
- 5.: fuel gauge
- 6.: fuel filter
- 7.: pressure regulator
- 8.: transfer jet pump on return line (8')
- 9.: tank opening
- 10.: mounting flange
- 11.: attachment points
- 12.: linkage element
- 13.: fuel supply line

Figure 1 shows a complete module intended to lie on the bottom of a flat tank (1).

Figure 1' and 1" arc respectively a front view and a side view of the complete module illustrated in figure 1. They show that its profile may be shaped to fit the tank opening (9), and for instance be circular.

The way the pressure regulator (7) creates a side jet (8) to power the main jet pump (4, the one filling the reservoir) is also detailed in Figure 1.

Figure 2 comprises an elevated view and a cut through a system according to another embodiment of the invention according to which the fuel tank (1) has a recess into which a prefabricated reservoir (2) fits. The pump (3), which is snapped in a fixation recess (11) molded with the reservoir's cover (2), is shown before tilting it for its final, horizontal position (shown in dotted lines).

And figure 3 pictures still another embodiment according to which a recess in the fuel tank bottom (1) plays the role of reservoir so that it is merely provided with a cover (2') after having been molded in one piece with the reservoir. A fuel filter (6) is sandwiched in between the 2-piece reservoir. A fuel supply pump (3) is mounted inclined and partially inside the reservoir (2). It sucks fuel through the filter (6) which covers the entire surface of the tank recess (2).

## Claims

1. Fuel tank comprising a reservoir and a fuel pump sucking fuel out of said reservoir, wherein said reservoir has a low profile and wherein the fuel pump is mounted horizontally using fixation means which are deformable so that the pump can be tilted (and put horizontally) after having been plugged in.

2. Fuel tank according to claim 1, wherein the low profile reservoir is a recess integrally molded with the fuel tank bottom.

3. Fuel tank according to the preceding claim, wherein the recess comprises a filter element so that it plays the role both of the low profile reservoir and of a filter housing.
